# EUROPÄISCHE PATENTANMELDUNG

(11) **EP 1 619 216 A1**
(43) Veröffentlichungstag der Anmeldung: **25.01.2006**
(21) Anmeldenummer: 04017090.4
(22) Anmeldetag: 20.07.2004
(51) Int. Cl.: C08J 3/20, C08K 7/24

(54) **Verfahren zur Herstellung von Nano-Verbundwerkstoffen**

(71) Anmelder: Tuhh Technologies GmbH, 21079 Hamburg (DE); Technische Universität Hamburg-Harburg, 21073 Hamburg (DE)
(72) Erfinder: Broza, Georg, Dr.-Ing., 21614 Buxtebude (DE); Roslaniec, Zbigniew, Prof. Dr.-Ing., 70344 Szczecin (PL); Schulte, Karl, Prof. Dr.-Ing., 21244 Buchholz (DE)
(74) Vertreter: Eisenführ, Speiser & Partner

(57) **Zusammenfassung**

Die Erfindung betrifft ein Verfahren zur Herstellung von Kohlenstoffnanotubeverstärkten Kunststoffen, mit den Verfahrensschritten Synthetisieren des Kunststoffs mittels Synthesereaktion und Zumischen von Kohlenstoffnanotubes. Bekannte Verfahren weisen den Nachteil auf, dass eine homogene Verteilung der Kohlenstoffnanotubes in dem Kunststoff nicht zu erreichen ist, da die gleichmäßige Dispergierung der Kohlenstoffnanotubes im aufgeschmolzenen Kunststoff unzureichend ist. Die Erfindung löst dieses Problem, indem der Kunststoff mittels Polykondensationsreaktion synthetisiert wird und das Zumischen der Kohlenstoffnanotubes vor dem Ende der Polykondensationsreaktion erfolgt. Die Erfindung betrifft weiterhin eine Vorrichtung zur Ausführung des erfindungsgemäßen Verfahrens und ein mit dem erfindungsgemäßen Verfahren hergestelltes, Kohlenstoffnanotubeverstärktes Polyester.

## Beschreibung

Die Erfindung betrifft ein Verfahren zur Herstellung von Kohlenstoffnanotube-verstärkten Kunststoffen, mit den Verfahrensschritten Synthetisieren des Kunststoffs mittels Polykondensationsreaktion und Zumischen von Kohlenstoffnanotubes. Die Erfindung betrifft weiterhin eine Vorrichtung zum Ausführen von Herstellungsverfahren der vorgenannten Art und ein mit Kohlenstoffnanotubes verstärktes Polyester.

Kohlenstoffnanotubes (oder auch Kohlenstoffnanoröhrchen oder Carbonanotubes, im folgenden kurz CNT bezeichnet) sind aus Kohlenstoffatomen in bestimmter molekularer Anordnung ausgebildete, faserartige Strukturen. CNT zeichnen sich durch sehr hohe Aspektverhältnisse (Verhältnis der Faserlänge zum Faserdurchmesser) aus. CNT bestehen regelmäßig aus Wandabschnitten und von diesen Wandabschnitten umschlossenen Hohlräumen. Je nach Anordnung der Wandstrukturen spricht man auch von einlagigen Kohlenstoffnanotubes (single wall carbon nanotubes, SWCNT), welche als eine einzelne Röhre aufgebaut sind und einen Innendurchmesser von 1-3nm aufweisen, oder von mehrlagigen Kohlenstoffnanotubes (multi wall carbon nanotubes, MWCNT), welche mehrere konzentrisch ineinander geschachtelte Röhren umfassen. CNT weisen Außendurchmesser im Bereich von etwa 1nm bis 400nm auf, wobei CNT mit einem Außendurchmesser von etwa 10 bis 400 nm häufig alternativ als Kohlenstoffnanofaser (Carbon nano fibre, CNF) bezeichnet werden.

Aufgrund ihres geringen Durchmessers und der im Verhältnis dazu hohen Länge sind CNT in der Lage, die Eigenschaften eines Werkstoffs, in den sie als Verstärkungskomponente eingebracht werden, in sehr vorteilhafter Weise zu verbessern. So kann regelmäßig durch Verstärken mit CNT eine Erhöhung der Fließ- und Streckspannung und des Elastizitätsmoduls im Vergleich zum unverstärkten Kunststoff erzielt werden. Thermoplastische Elastomere erreichen durch Verstärkung mit CNT regelmässig auch eine Erhöhung der Bruchdehnung.

Bekannte Verfahren zur Herstellung von CNT-verstärkten Kunststoffen bestehen darin, ein synthetisiertes Polymer, welches regelmäßig in Granulatform, Pulverform oder auch Blockform vorliegt, durch Wärmezufuhr aufzuschmelzen und so in einen flüssig-viskosen Zustand zu überführen. Dadurch kann die Viskosität des Polymers abgesenkt werden, und die CNT können in das Polymer eingemischt werden. Ein solches Verfahren kann der US 4,157,325 entnommen werden

Aus der kanadischen Offenlegungsschrift CA 2,324,353 A1 ist bekannt, Füllstoffe in ein Monomer einzumischen, eine in-situ-Polymerisation zu starten und den so synthetisierten Thermoplast nachfolgend aufzuschmelzen, um weitere Füllstoffe darin einzubringen.

Aus US 6,331,265 ist ein Verfahren zur Synthetisierung eines CNT-verstärkten Kunststoffes mittels Polymerisation bekannt, bei dem die CNT dem Monomer vor dem Polymerisationsprozess zugeführt werden. Dieses Verfahren weist den Nachteil auf, dass die Zumischung der CNT zu der nicht-polymerisierten Reaktionsmasse den Ablauf der Polymerisationsreaktion negativ beeinflusst, da die CNT die freien Bindungsstellen besetzen können und so die Vernetztungsdichte verringern oder die Vernetzung vollständig blockieren können.

Grundsätzlich besteht ein Bedarf an einer Vielzahl von hochwertigen Kunststoffen mit CNT-Verstärkung. Die bekannten Herstellungsverfahren erlauben die Herstellung einer Auswahl von Kunststoffen im Polymerisationsverfahren. Hierbei läuft eine Kettenreaktion unter identischen Monomeren ab, deren Reaktionsfähigkeit durch Aufbrechen einer Doppel- oder Dreifachbindung zwischen den C-Atomen erzielt wird. Mit diesem Synthetisierungsverfahren können eine Reihe von gebräuchlichen Massenkunststoffen synthetisiert werden.

Es ist aber wünschenswert, auch bei Kunststoffen, die mit anderen Synthetisierungsverfahren synthetisiert werden, eine gleichmäßige CNT-Verstärkung zu erzielen. Bei diesen anderen Synthetisierungsverfahren reagieren regelmäßig zwei unterschiedliche Moleküle miteinander, deren Reaktionsfähigkeit durch reaktionsfähige Endgruppen, wie beispielsweise die Hydroxylgruppe oder die Carboxylgruppe, gegeben ist. Bei diesen regelmäßig hochwertigeren Kunststoffen kann häufig nicht durch Erwärmung eine ausreichende Viskositätsverringerung erzielt werden, um die CNT gleichmäßig in der Schmelze zu verteilen. Zudem reagieren diese Synthetisierungsverfahren teilweise empfindlich auf die Zugabe von Zuschlagstoffen während der Synthese, da diese die freien Reaktionsenden besetzen können.

Aufgrund Ihres hohen Aspektverhältnisses neigen CNT dazu, Verknäuelungen und innige Verschlaufungen auszubilden, wodurch die für einen guten Verstärkungseffekt erforderliche, vollständige und innige Umschließung der CNT mit dem Polymer regelmäßig erheblich erschwert wird. Dies wird dadurch weiter verschlechtert, dass bei bekannten Verfahren nur eine limitierte Absenkung der Viskosität durch Temperaturerhöhung möglich ist, da der Kunststoff sich bei Überschreiten einer bestimmten Temperatur negativ und irreversibel verändert oder gar zersetzt.

Darüber hinaus ermöglichen CNT bereits dann eine erhebliche Verbesserung der mechanischen Eigenschaften eines Kunststoffs, wenn sie in nur geringem Anteil (beispielsweise 0,1 Gew.-%, auch noch weniger) zugemischt werden. Bei solch geringen CNT-Gehalten im Kunststoff ist jedoch mit den bekannten Verfahren eine homogene Verteilung, die zum Herstellen eines als Kontruktionswerkstoffs verwendbaren Materials erforderlich ist, regelmäßig nicht erreichbar.

Der Erfindung lag daher die Aufgabe zugrunde, ein Verfahren und eine Vorrichtung bereitzustellen, welche(s) es ermöglicht, CNT-verstärkte hochwertige Kunststoffe herzustellen, in denen die CNT homogener verteilt sind als in CNT-verstärkten Kunststoffen, die mit bekannten Verfahren hergestellt sind.

Die Aufgabe wird erfindungsgemäß gelöst durch ein Verfahren der eingangs genannten Art, indem der Kunststoff mittels Polykondensationsreaktion synthetisiert wird und das Zumischen der Kohlenstoffnanotubes vor dem Ende der Polykondensationsreaktion erfolgt.

Unter Zumischen der CNT soll hierbei das physikalische Einbringen der CNT in mindestens ein Edukt der Polykondensationsreaktion, und/oder eine Eduktmischung verstanden werden. Diese Zumischung erfolgt erfindungsgemäß vor dem Ende, also vor oder während der Synthesereaktion.

Die Erfindung ermöglicht einerseits eine sehr homogene Verteilung der CNT in dem Kunststoff, da aufgrund der geringen Viskosität des Edukts / der Eduktmischung eine besonders wirksame Durchmischung erfolgen kann. Weiterhin werden die bei der Polykondensationsreaktion auftretenden makro- und mikroskopischen Molekülbewegungen zur Durchmischung genutzt. Darüberhinaus wird eine besonders innige Verbindung zwischen der Kunststoffmatrix und den CNT erreicht, da während des Ablaufs der Polykondensationsreaktion eine physikalisch/chemische Wechselwirkung der CNT mit dem Kunststoff erreicht wird. Schließlich ermöglicht die Erfindung eine besonders gute Auflösung der durch die Verknäuelungen und Verschlaufungen gebildeten Agglomerate und folglich eine etwa vollständige Umschließung jeder einzelnen CNT durch die Kunststoffmatrix.

Als weiterer Vorteil der Erfindung hat sich herausgestellt, dass auch vernetzte Kunststoffe, also Duroplaste oder Elastomere, welche sich nicht durch Erwärmen in einen schmelzflüssigen Zustand bringen lassen, mittels des erfindungsgemäßen Verfahrens durch CNT verstärkt werden können.

Eine erste vorteilhafte Verfahrensform besteht darin, dass das Zumischen der Kohlenstoffnanotubes vor dem Beginn der Polykondensationsreaktion in mindestens ein Edukt der Polykondensationsreaktion erfolgt. Durch diese Fortbildung wird regelmäßig, da die Edukte eine sehr niedrige Viskosität aufweisen, also sehr dünnflüssig sind, eine sehr gute Durchdringung der CNT-Agglomerate und Umschließung der CNT erreicht.

Dabei kann das Verfahren weiter fortgebildet werden, indem die Kohlenstoffnanotubes demjenigen Edukt der Polykondensationsreaktion zugemischt werden, welches unter den Edukten eine vergleichsweise niedrige, vorzugsweise die niedrigste Viskosität aufweist. Hierdurch wird die Durchdringung und Umschließung weiter verbessert.

Es ist insbesondere vorteilhaft, wenn das Zumischen des Kohlenstoffnanotubes während des Ablaufs der Polykondensationsreaktion in die Reaktionsmischung erfolgt. Dies erlaubt einen schnellen Verfahrensablauf bei gleichzeitig geringer Verweilzeit der CNT im reaktionsfähigen Gemisch und guter Verteilung der CNT im Kunststoff.

Eine weitere vorteilhafte Verfahrensform sieht vor, dass die Kohlenstoffnanotubes vor dem Zumischen in ein Fluid eingebracht werden, dessen Viskosität geringer ist als diejenige Viskosität des Edukts mit der niedrigsten Viskosität und die so erzeugte Mischung aus Kohlenstoffnanotubes und dem Fluid dann zugemischt wird. Das Fluid kann dabei vorzugsweise eine Viskosität < 20 * 10⁻³Pas aufweisen. Durch die so vorgeschaltete Mischung der CNT mit einem Fluid und dem Einmischen dieser CNT-Fluid-Mischung in mindestens ein Edukt und/oder eine Eduktmischung wird die homogene Verteilung und die innige Umschließung der CNT weiter gefördert.

Das Fluid kann dabei vorteilhafterweise ein Lösungsmittel des Edukts sein. Hierdurch wird eine vorteilhafte Verdünnung und Viskositätsverringerung des Kunststoffs erzielt. Darüber hinaus kann das Fluid in einfacher Weise durch Abdampfen aus dem Reaktionssystem bzw. Kunststoff nach der Herstellung des CNT-verstärkten Kunststoffs wieder entfernt werden. Des weiteren wird die Oberfläche der CNT durch die Benetzung mit dem Lösungsmittel vorbereitet für eine physikalisch/chemische Wechselwirkung mit dem Kunststoff.

Die vorbeschriebene Verfahrensweiterbildung kann weiter fortgebildet werden, indem die Mischung aus Kohlenstoffnanotubes und dem Fluid während der Polykondensationsreaktion zugemischt wird. Dabei werden die während der Reaktion ablaufenden Molekülbewegungen und -veränderungen als Verteilungswirkung der CNT-Fluid-Mischung in der Eduktmischung genutzt.

Die vorgenannten Verfahrensfortbildungen können weiter fortgebildet werden, indem die Kohlenstoffnanotubes in dem Fluid bzw. dem Edukt etwa homogen verteilt werden. Dies kann durch Einhalten bestimmter Verteilungszeiten, Schütteln, Rühren, Fördern der Mischung durch eine Leitung oder ähnliches erfolgen.

Dabei können die Kohlenstoffnanotubes insbesondere mittels Einwirkung von Ultraschall oder mittels Hochleistungsrührer homogen verteilt werden. Durch diese Verfahren hat sich eine besonders vorteilhafte homogene Verteilung und Dispergierung der CNT in dem Fluid bzw. dem Edukt und folglich auch in dem synthetisierten Kunststoff gezeigt. Dabei ist es vorteilhaft, wenn die Einwirkung von Ultraschall bzw. Hochleistungsrührer möglichst lang aufrechterhalten wird, d.h. vor und während der Synthesereaktion, gegebenenfalls bis zum Ende der Polykondensationsreaktion, um eine Agglomeration der CNT zu vermeiden.

Das vorgenannte Verfahren kann weiter fortgebildet werden, indem die Ultraschall- bzw. Rühreinwirkung mindestens einmal unterbrochen wird. Hierdurch wird eine unerwünschte Erwärmung der Syntheseedukte und Syntheseprodukte während des Ultraschall- bzw. Rührvorgangs vermieden, und es wird erreicht, dass möglicherweise eingeschlossene Gasblasen aus dem Fluid, dem Edukt bzw. der Eduktmischung infolge Schwerkraft und Auftrieb abgeführt werden.

Das erfindungsgemäße Verfahren ist insbesondere vorteilhaft, wenn 0,001 bis 15 Gew.-%, vorzugsweise etwa 0,05 bis 2,5 Gew.% Kohlenstoffnanotubes (bezogen auf das Endprodukt) mit einem Durchmesser von 1 bis 50 nm und/oder 0,001 bis 25 Gew.-%, vorzugsweise etwa 0,5 bis 4 Gew.%, Kohlenstoffnanotubes mit einem Durchmesser von 40 bis 300 nm, vorzugsweose 40 bis 200nm zugemischt werden. Bei diesen Zumischungsmengen von CNT der genannten Durchmesserbereiche ergeben sich mit dem erfindungsgemäßen Verfahren regelmäßig Kunststoffe mit besonders vorteilhaft verbesserten Eigenschaften.

Bei einer weiteren vorteilhaften Verfahrensform wird während der homogenen Verteilung der Kohlenstoffnanotubes in dem Fluid und/oder während der Polykondensationsreaktion Wärme zu- oder abgeführt. Durch die Zufuhr oder Abfuhr von Wärme kann die homogene Verteilung und die Umschließung der CNT vorteilhaft beeinflusst werden, indem die Viskosität zur besseren Vermischung verringert wird und sie zur Stabilisierung eines gut durchmischten Zustands erhöht wird. Darüber hinaus kann durch Wärmezu- und -abfuhr der zeitliche Verlauf der Reaktion beeinflusst werden.

Eine weitere vorteilhafte Ausführungsform des erfindungsgemäßen Verfahrens sieht vor, dass das mindestens eine Edukt bzw. die reagierenden Edukte unter erhöhten oder verringerten Druck gesetzt werden. Durch Beaufschlagen des Edukts bzw. der Eduktmischung mit einem erhöhten Druck oder einem Vakuum kann wiederum eine Beeinflussung der Viskosität erreicht werden, wie zuvor, und darüber hinaus ein Abdampfen eines Fluids gehemmt bzw. erzielt werden.

Eine weitere vorteilhafte Ausführungsform des erfindungsgemäßen Verfahrens besteht darin, dass die Kohlenstoffnanotubes mindestens einem Edukt oder einer Eduktmischung vor Zugabe eines Katalysators zugegeben werden. Bei dieser Ausführungsform wird die Polykondensationsreaktion durch die Zugabe des Katalysators gestartet, so dass vor der Zugabe ein für die homogene Verteilung und innige Umschließung der CNT vorteilhafter dünnflüssiger Zustand erhalten werden kann, der sich erst im Moment der Zugabe des Katalysators ändert.

Schließlich sieht eine weitere vorteilhafte Ausführungsform des erfindungsgemäßen Verfahrens vor, dass die Kohlenstoffnanotubes vor dem Zumischen chemisch und oder thermisch behandelt werden. So können die Oberflächen der Kohlenstoffnanotubes beispielsweise durch Oxidation und/oder Funktionalisierung mit Atomen /Gruppen wie H, Cl, OH, COOH, NH2, SH, SCH3 modifiziert werden. Durch diese Modifikation oder Funktionalisierung wird regelmäßig die Wechselwirkung zwischen den Kohlenstoffnanotubes und dem Edukt bzw. dem Kunststoff verbessert und es kann eine homgenere Verteilung der Kohlenstoffnanotubes in dem Edukt bzw. dem Kunststoff sowie eine Reduzierung der Agglomerationen und eine verstärkte Anbindung der Kohlenstoffnanotubes an die Kunststoffmatrix erreicht werden. Weiterhin kann durch die chemische und/oder thermische Behandlung eine Reinigung der Kohlenstoffnanotubes erreicht werden. So kann beispielsweise durch Kombination einer nasschemischen Oxidation und einem trockenem Erhitzen eine Reinigung von Ruß und und graphitischen Nanopartikeln sowie Katalysatorresten aus der Kohlenstoffnanotube-Herstellung (insbesondere Metalle und Metallverbindungen) erreicht werden.

Diese Fortbildung ist insbesondere dann vorteilhaft, wenn die CNT während des Ablaufs der Polykondensationsreaktion zugeführt werden, um einen möglichst kurzen Aufenthalt der CNT in dem Reaktionsgemisch bei zugleich guter Verteilung der CNT zu erzielen.

Ein weiterer Aspekt der Erfindung ist eine Vorrichtung der eingangs genannten Art, bei welche der Behälter ausgebildet ist, damit als Synthesereaktion eine Polykondensationsreaktion ablaufen kann und dass Mittel zum Zumischen der Kohlenstoffnanotubes vor dem Ende der Polykondensationsreaktion aufweist. Die Mittel können dabei als Zuführrohr, Förderschnecke oder ähnliches ausgebildet sein und in den Reaktionsbehälter oder in Zuführungsleitungen zum Reaktionsbehälter, durch welche beispielsweise Edukte geleitet werden, münden.

Die erfindungsgemäße Vorrichtung kann weiter fortgebildet werden, indem die Mittel zum Zumischen der Kohlenstoffnanotubes ausgebildet sind, um die Kohlenstoffnanotubes in eines der Edukte einzubringen, bevor das Edukt in den Reaktionsbehälter eingebracht wird. Hierzu kann beispielsweise vorgesehen sein, dass ein oder mehrere Edukte in einem Vormischbehälter gesammelt werden und in diesem Vormischbehälter die Kohlenstoffnanotubes zugemischt werden. Der Vormischbehälter ist dann mit dem Reaktionsbehälter verbunden, um die CNT-Eduktmischung in den Reaktionsbehälter einführen zu können.

Eine weitere vorteilhafte Ausführungsform sieht vor, dass Mittel zum homogenen Verteilen, insbesondere zum Dispergieren der Kohlenstoffnanotubes vorgesehen sind. Die Mittel zum homogenen Verteilen können dabei einerseits so angeordnet sein, dass eine homogene Verteilung der CNT im Edukt erreicht wird und/oder sie können so angeordnet sein, dass eine homogene Verteilung der CNT in der Eduktmischung im Reaktionsbehälter erreicht wird. Die Mittel zum homogenen Verteilen können insbesondere als Hochleistungsrührer oder Sonikator ausgeführt sein.

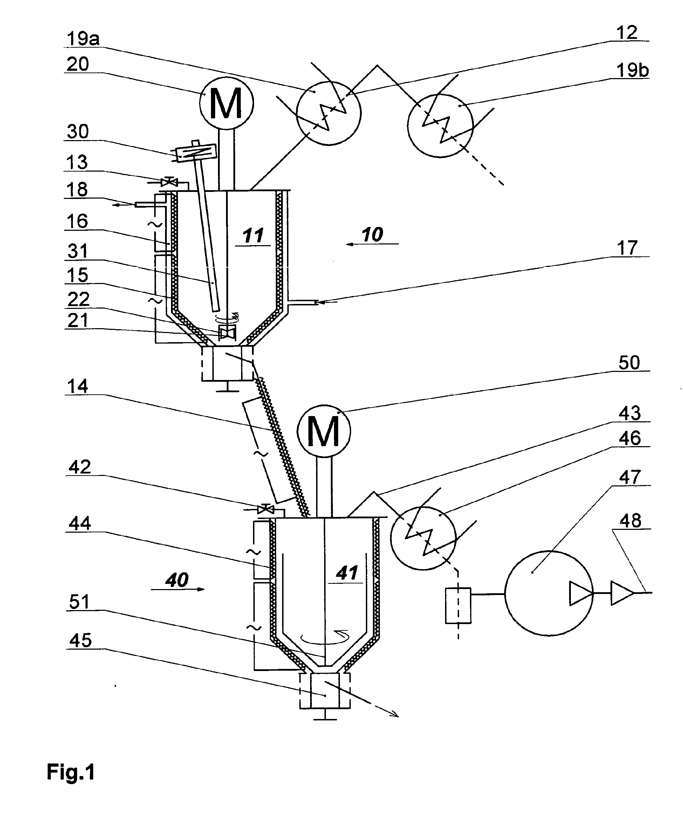

Ein weiterer Aspekt der Erfindung ist ein durch Polykondensationsreaktion synthetisiertes Polyester, welches mit Kohlenstoffnanotubes homogen verstärkt ist. Unter homogen verteilt soll dabei insbesondere verstanden werden, dass jedes Kohlenstoffnanotube in dem Polyester vollständig von der Polyestermatrix umgeben ist.
Eine vorteilhafte Ausführungsform der erfindungsgemäßen Vorrichtung wird mit Bezug zur einzigen Figur beschrieben.

Die Figur zeigt eine bevorzugte Ausführungsform der erfindungsgemäßen Synthesevorrichtung. Die gezeigte Vorrichtung umfasst einen Vormischbehälter 10 und einen Reaktionsbehälter 40. Der Vormischbehälter 10 umfasst einen Mischraum 11, in den über eine Einfüllleitung 13 ein Lösungsmittel, Lösungsmittel mit CNT, CNT, Edukte und/oder Edukte mit CNT einfüllbar sind. Die Mischkammer 11 ist am Boden trichterförmig ausgebildet und mündet in eine Verbindungsleitung 14, durch welche das in der Mischkammer befindliche Gemisch in den Reaktionsbehälter einleitbar ist.

In dem Mischbehälter 10 ist ein Hochleistungsrührwerk 20, 21, 22 angeordnet, welches ein Rührelement 21 umfasst, das von einem Käfig 22 umgeben ist und von einem Motor 20 angetrieben wird. Weiterhin ragt in den Mischraum 11 etwas schräg geneigt zur Vertikalen ein Sonikator 30, 31 ein, bestehend aus einem Ultraschallübertragungselement 31 und einem Antrieb 30 zum Versetzen des Ultraschallübertragungselements 31 in Schwingungen.

Die Mischkammer 11 wird von einer dreifachwandigen Wand begrenzt. In der nächst zu der Mischkammer liegenden inneren Wandkammer ist ein Heizelement 15 angeordnet. Diese innere Wandkammer ist von einer äußeren Wandkammer 16 umgeben, durch welche ein Kühlfluid (beispielsweise Wasser oder Stickstoff) durch eine Einführöffnung 17 und eine Ausführöffnung 18 geleitet werden kann.

Bei der Vermischung und/oder Vorreaktion im Vormischbehälter 10 entstehende Gase können über eine Abführleitung 12 aus dem Vormischbehälter abgeleitet werden und mittels um die Leitungen 12 herum angeordnete Kondensatoren 19 a, b verflüssigt werden.

Der Reaktionsbehälter 40 umfasst eine Reaktionskammer 41, in welche durch die Verbindungsleitung 14 das in der Mischkammer vorbereitete Gemisch aus CNT und einem Lösungsmittel, einem Edukt und/oder einer Eduktmischung eingeleitet werden kann. In der Reaktionskammer ist ein Rührwerk 50, 51 angeordnet, welches eine mehrschaufelige Rührschaufel 51 umfasst, die durch einen Elektromotor 50 angetrieben wird.

In den Reaktionsraum 41 können durch eine weitere Leitung 42 weitere Stoffe, die für die Reaktion benötigt werden, eingeleitet werden, z.B. zusätzliche Edukte, Katalysatoren oder ähnliches.

Der Reaktionsbehälter 40 ist doppelwandig ausgeführt. In dem zwischen den beiden Wänden befindlichen Hohlraum sind Heizelemente 44 angeordnet, um Wärme in den Reaktionsraum 41 einzubringen. Der Reaktionsraum 41 ist ebenfalls am Boden trichterförmig ausgebildet und das synthetisierte Produkt kann durch eine zentrale Abführöffnung 45 aus dem Reaktionsraum ausgeleitet werden.

Bei der Synthesereaktion im Reaktionsraum 41 entstehendes Gas kann über eine Abführleitung 43 einem Kondensator 46 zugeleitet werden und in einem Sammelgefäß 47 aufgefangen werden. Das Sammelgefäß weist eine Verbindungsleitung 48 auf, mittels derer es mit einer Vakuumpumpe zum Absaugen des Kondensats aus dem Reaktionsraum 41 in das Sammelgefäß 47 verbunden werden kann.

Im folgenden sollen einige vorteilhafte Ausführungsformen des erfindungsgemäßen Verfahrens beschrieben werden.

Allgemein kann das erfindungsgemäße Verfahren verwendet werden, um CNT oder in einem Fluid oder einem Edukt dispergierte CNT mit den Reaktionskomponenten von Polyestertypen in einem Reaktor zur Synthese bei einer Temperatur von 20 bis 140 °C, vorzugsweise etwa 40 bis 65°C, zusammenzumischen. Nach Zugabe des Katalysators wird die Mischung innerhalb von 1 bis 80 Minuten, vorzugsweise etwa 10 bis 20 min, auf eine Temperatur zwischen 20 und 300 °C, vorzugsweise etwa bis auf 260°C, erwärmt und der entstehende Druck innerhalb 5 bis 80 Minuten, vorzugsweise etwa 10 bis 20min, auf 0,01 bis 1 hPa, vorzugsweise etwa 0,5 bis 0,8hPa, abgesenkt. Nach dem Abdestillieren des Glykolüberschusses wird die homogene Verteilwirkung (z.B. Rühren oder Ultraschalleinwirkung) unterbrochen und das hergestellte CNT-verstärkte Polyester aus dem Reaktor entnommen.

Bei einer ersten vorteilhaften Verfahrensform werden 1,58 g SWCNT und eine (für die nachfolgende Synthesereaktion überstöchiometrische) Menge 1,4-Butanodiol zuerst mittels Ultraschall und danach mittels Hochleistungsrührer vermischt und die MWCNT dabei in dem 1,4-Butanodiol dispergiert. Hierauf folgend wird die Dispersion mit Dimethylterephthalat in einem Reaktorbehälter aus Edelstahl bei einer Temperatur von etwa 140 °C zusammengemischt und innerhalb von etwa 40 Minuten auf etwa 190 °C unter kontinuierlicher Mischung erwärmt. Nach Zugabe von Tetrabutyltitanate als Katalysator wird die Mischung weiter auf etwa 260 °C erwärmt und der durch die Reaktion entstehende Druck innerhalb von etwa 40 Minuten auf etwa 0,1 hPa abgesenkt. Hierauf folgend wird das nicht reagierte, überschüssige 1,4-Butanodiol abdestilliert und das Rühren der Mischung unterbrochen. Das durch die Synthesereaktion erhaltene Polybuthylenterephthalat PBT (etwa 300 g) wird aus dem Behälter entnommen und verfestigt sich unter Abkühlung. Das erhaltene Polykondensationsprodukt weist sehr gute Verarbeitungseigenschaften auf und wird zur leichteren späteren Verarbeitung granuliert.

Bei einer zweiten Ausführungsform des erfindungsgemäßen Verfahrens werden zunächst 6 g MWCNT in 65 ml Aceton dispergiert. Diese Mischung wird dann in den auf eine Temperatur von etwa 40 °C vorgewärmten Reaktionsbehälter eingebracht. Weiterhin wird 1,4-Butanodiol, Dimethylterephthalat, Poly(1,4-oxyviermethyleno)diol (PTMO) und Hexano-1,2,6-triol eingebracht. Die Mischung wird auf etwa 260°C erwärmt. Während des Erwärmens dampft Aceton aus der Mischung ab weiterhin zunächst Methanol und dann überschüssiges Butanodiol abdestilliert. Als Ergebnis erhält man etwa 300 g CNT-verstärktes Polyetherester-Blockcopolymer mit sehr hohen reversiblen Dehnungen, welches wiederum granuliert wird.

Bei einer dritten vorteilhaften, erfindungsgemäßen Verfahrensform werden 0,96 g MWCNT in Ethylenglycol mittels Ultraschall (Sonikator) dispergiert. Dabei wird der Dispergierungsvorgang etwa alle 5 Minuten für 1 bis 2 Minuten unterbrochen, indem die Ultraschalleinwirkung verhindert wird (beispielsweise durch Abschalten des Sonikators oder Herausziehen des Sonikators aus der Mischung), um die Mischung nicht zu stark aufzuheizen. Alternativ oder zusätzlich kann eine äußere Kühlung der Mischung vorgesehen werden, d.h. der Mischung Wärme entzogen werden. Nach der Dispergierung (ca. 30 Minuten) wird die Mischung zu den anderen aufgewärmten Reaktionskomponenten im Reaktor bei einer Temperatur von etwa 140 °C in den Reaktor eingebracht. Nach Zugabe des Katalysators bei einer Temperatur von etwa 210 °C läuft die Reaktion weiter bis zu einer Temperatur von etwa 280°C. Das so hergestellte CNT-verstärkte Polyester weist einen hohen Elastizitätsmodul von bis zu 2 GPa auf und wird zur weiteren Verarbeitung wiederum granuliert.

Die Ausführungsbeispiele können in vielfältiger Weise weiter modifiziert werden.

So kann vorteilhafterweise beim ersten Ausführungsbeispiel anstelle der 1,58 g MWCNT auch bis zu 8 g SWCNT oder auch 0,25 g bis 6 g CNT mit einem Durchmesser von 100 bis 400 nm (CNF) verwendet werden. Die Fließspannung des so erhaltenen Kunststoffs kann dabei 20MPa überschreiten.

Beim zweiten Ausführungsbeispiel können alternativ zu den 6 g MWCNT auch etwa 1,43 g CNF verwendet werden. Beim dritten Ausführungsbeispiel können anstelle der 0,96 g MWCNT auch 0,65 g SWCNT oder 5,35 g bis 7,34 g CNF verwendet werden.

Die in den Ausführungsbeispielen genannten Mengen sollen dabei nicht beschränkend verstanden werden, sondern dienen lediglich als Beispiele von vorteilhaften Verfahrensformen für bestimmte Anwendungen. Sie können für davon unterschiedliche Anwendungen unter- und überschritten werden.

Durch die Erfindung wird ein vorteilhaftes Verfahren und eine Vorrichtung zur Ausführung des Verfahrens bereitgestellt, welche(s) insbesondere zur Herstellung von CNT-verstärkten teilkristallinen und teilaromatischen Polyestertypen, wie z.B. Polyethylenterephthalat, Polybuthylenterephthalat und Polybuthylenterephthalat/Polytetraoxymethylen geeignet sind. Die hergestellten Polyestertypen können durch Mischung bekannter Edukte und Verwendung bekannter Katalysatoren synthetisiert werden. Dabei können die CNT vor dem Ende der Synthesereaktion einem Edukt, mehreren Edukten oder einer Eduktmischung zugemischt werden. Vorteilhafterweise werden die CNT zuvor in einem polaren oder unpolaren Lösungsmittel, beispielsweise Aceton, Toluol, Xylol, Alkohol, Ether, etc. dispergiert.

## Patentansprüche

1. Verfahren zur Herstellung von Kohlenstoffnanotube-verstärkten Kunststoffen, mit den Verfahrensschritten
- Synthetisieren des Kunststoffes, und
- Zumischen von Kohlenstoffnanotubes,
**dadurch gekennzeichnet, dass** das der Kunststoff mittels Polykondensationsreaktion synthetisiert wird und das Zumischen der Kohlenstoffnanotubes vor dem Ende der Polykondensationsreaktion erfolgt.

2. Verfahren nach Anspruch 1,
**dadurch gekennzeichnet, dass** das Zumischen der Kohlenstoffnanotubes vor dem Beginn der Polykondensationsreaktion in mindestens ein Edukt der Polykondensationsreaktion erfolgt.

3. Verfahren nach Anspruch 1 oder 2,
**dadurch gekennzeichnet, dass** die Kohlenstoffnanotubes demjenigen Edukt der Polykondensationsreaktion zugemischt werden, welches unter den Edukten eine vergleichsweise niedrige, vorzugsweise die niedrigste Viskosität aufweist.

4. Verfahren nach Anspruch 1,
**dadurch gekennzeichnet, dass** das Zumischen der Kohlenstoffnanotubes während des Ablaufs der Polykondensationsreaktion in die Reaktionsmischung erfolgt.

5. Verfahren nach einem der vorhergehenden Ansprüche,
**dadurch gekennzeichnet, dass** die Kohlenstoffnanotubes vor dem Zumischen in ein Fluid eingebracht werden, dessen Viskosität geringer ist als diejenige Viskosität des Edukts mit der niedrigsten Viskosität und die so erzeugte Mischung aus Kohlenstoffnanotubes und dem Fluid dann zugemischt wird.

6. Verfahren nach Anspruch 5,
**dadurch gekennzeichnet, dass** das Fluid ein polares oder unpolares Lösungsmittel des Kunststoffes und/oder eines Edukts der Polykondensationsreaktion ist.

7. Verfahren nach einem der Ansprüche 5 oder 6,
**dadurch gekennzeichnet, dass** die Mischung aus Kohlenstoffnanotubes und dem Fluid während der Polykondensationsreaktion zugemischt wird.

8. Verfahren nach einem der vorhergehenden Ansprüche,
**dadurch gekennzeichnet, dass** die Kohlenstoffnanotubes in dem Fluid bzw. dem Edukt etwa homogen verteilt werden.

9. Verfahren nach Anspruch 8,
**dadurch gekennzeichnet, dass** die Kohlenstoffnanotubes mittels Einwirkung von Ultraschall oder mittels Hochleistungsrührer homogen verteilt werden

10. Verfahren nach Anspruch 9,
**dadurch gekennzeichnet, dass** die Ultraschall- bzw. Rühreinwirkung mindestens einmal unterbrochen wird.

11. Verfahren nach einem der vorhergehenden Ansprüche,
**dadurch gekennzeichnet, dass** 0,001 - 15 Gew.-% Kohlenstoffnanotubes mit einem Durchmesser von 1-40 nm zugemischt werden.

12. Verfahren nach einem der vorhergehenden Ansprüche,
**dadurch gekennzeichnet, dass** 0,001 - 25 Gew.-% Kohlenstoffnanotubes mit einem Durchmesser von 40-300nm, insbesondere 40-200nm, zugemischt werden.

13. Verfahren nach einem der vorhergehenden Ansprüche,
**dadurch gekennzeichnet, dass** während der homogenen Verteilung der Kohlenstoffnanotubes in dem Fluid und/oder während der Polykondensationsreaktion Wärme zu- oder abgeführt wird.

14. Verfahren nach einem der vorhergehenden Ansprüche,
**dadurch gekennzeichnet, dass** das mindestens eine Edukt bzw. die reagierenden Edukte unter erhöhten oder verringerten Druck gesetzt werden.

15. Verfahren nach einem der vorhergehenden Ansprüche,
**dadurch gekennzeichnet, dass** die Kohlenstoffnanotubes mindestens einem Edukt oder einer Eduktmischung vor Zugabe eines Katalysators zugegeben werden.

16. Verfahren nach einem der vorhergehenden Ansprüche,
**dadurch gekennzeichnet, dass** die Kohlenstoffnanotubes vor dem Zumischen chemisch und oder thermisch behandelt werden.

17. Vorrichtung zur Herstellung von Kohlenstoffnanotube-verstärkten kunststoffen, umfassend:
- einen Reaktionsbehälter, in dem eine Synthesereaktion ablaufen kann, und
- Mittel zum Einbringen der Edukte der Synthesereaktion in den Reaktionsbehälter,
**dadurch gekennzeichnet, dass** der Behälter ausgebildet ist, dass als Synthesereaktion eine Polykondensationsreaktion ablaufen kann und dass Mittel zum Zumischen der Kohlenstoffnanotubes vor dem Ende der Polykondensationsreaktion vorgesehen sind.

18. Vorrichtung nach Anspruch 17,
**dadurch gekennzeichnet, dass** die Mittel zum Zumischen der Kohlenstoffnanotubes ausgebildet sind, um die Kohlenstoffnanotubes in eines der Edukte und/oder in ein Fluid einzubringen, bevor das Edukt bzw. das Fluid in den Reaktionsbehälter eingebracht wird.

19. Vorrichtung nach Anspruch 17 oder 18,
**dadurch gekennzeichnet, dass** Mittel zum homogenen Verteilen, insbesondere zum Dispergieren der Kohlenstoffnanotubes vorgesehen sind.

20. Polyester, welches durch Polykondensationsreaktion synthetisiert ist,
**dadurch gekennzeichnet, dass** das Polyester mit etwa homogen dispergierten Kohlenstoffnanotubes verstärkt ist.

21. Polyester, welches durch Polykondensationsreaktion synthetisiert ist,
**dadurch gekennzeichnet, dass** das Polyester durch ein Verfahren gemäß einem der Ansprüche 1-16 synthetisiert ist.

22. Polyester nach Anspruch 20 oder 21,
**dadurch gekennzeichnet, dass** eine physikalische und/oder eine chemische Wechselwirkung zwischen der Polyestermatrix und den Kohlenstoffnanotubes vorhanden ist.

23. Polyester, nach einem der Ansprüche 20-22,
**dadurch gekennzeichnet, dass** die Kohlenstoffnanotubes im Wesentlichen in unverschlaufter Anordnung in dem Polyester vorliegen.
